# EUROPEAN PATENT SPECIFICATION

(11) **EP 2 193 297 B1**
(45) Date of publication and mention of the grant of the patent: **30.09.2015**
(21) Application number: 08807754.0
(22) Date of filing: 22.09.2008
(51) Int. Cl.: F16K 15/02, F16K 31/08

(54) **CHECK VALVE**
RÜCKSCHLAGVENTIL
CLAPET ANTI-RETOUR

(30) Priority: 04.10.2007 IT BS20070150
(43) Date of publication of application: 09.06.2010
(73) Proprietor: YGROS S.R.L, 36035 Marano Vicentino, Vicenza (IT)
(72) Inventor: CAROLLO, Martino, 36010 Zane', Vicenza (IT)
(74) Representative: Mitola, Marco
(86) International application number: PCT/IB2008/053841
(87) International publication number: WO 2009/044309

(56) References cited:
- WO-A-98/52640
- CA-A1- 2 096 669
- DE-A1- 10 249 936
- GB-A- 2 159 248
- JP-A- 6 123 370

## Description

This invention concerns a check valve, and in particular a check valve for applications in the food, chemical, biological and pharmaceutical sectors.

In particular, check valves are widely created in these fields for use in tubing in order to prevent a return flow with regard to a preset outflow. Such valves consist of a shutter element that is in direct contact with the process fluid.

In many applications the process fluids or liquids are particularly delicate from a chemical and biological viewpoint, as in the case of foodstuff liquids which are especially sensitive to the formation of bacteria or micro-organisms caused by stagnation of the liquid or the formation of foams and emulsions.

In other cases the liquids used are particularly aggressive from a chemical viewpoint and may lead to erosion of the shutter element.

So in state of the art solutions there are shutters in foodstuff-compatible and anticorrosive materials: these well known shutters are often activated by means of a spring loaded element. Spring loaded elements increase the valve's energy consumption as well as load loss, and spring loaded elements, directly involved with the fluid, often create turbulence and contribute to the creation of foams and emulsions. Moreover, spring loaded elements break down due to fatigue and/or corrosion. Breakdowns can lead to considerable damage to components mounted in series with the valve, since fragments of spring break off and are transported into circulation by the flow.

There are also well known shutter solutions in ferromagnetic materials that can be actuated by magnetic fields in such a way as to limit the valve's energy consumption. However these ferromagnetic materials are not always compatible with certain fluids, especially in the foodstuffs sector.

JP-A-06123370 shows the features of the preamble of claim 1.

The purpose of this invention is to create a check valve that eliminates the aforementioned drawbacks with reference to state of the art technique.

These drawbacks and limitations are resolved by a check valve in accordance with claim 1.

Other forms of creating the valve as per the invention are described in the subsequent claims.

Further features and the advantages of this invention will be rendered more comprehensible by the description below of its preferable but not limitative examples of implementation, in which:

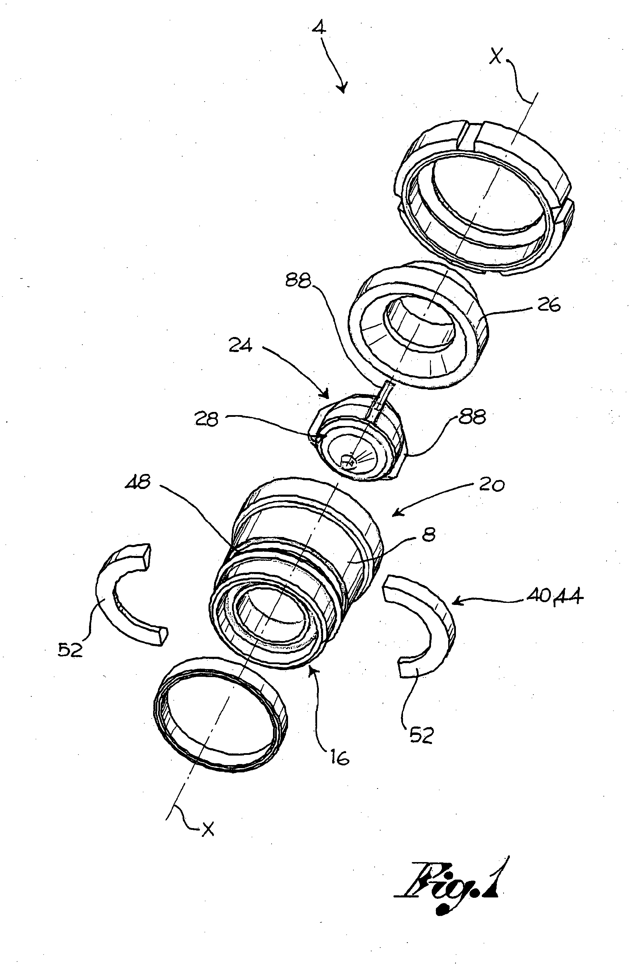

figure 1 represents a perspective view in separate parts of a check valve in accordance with a form of implementation of this invention;
figures 2-4 represent respectively lateral views, partially in section, of the valve in figure 1, in different functioning configurations;
figure 5 represents perspective and lateral views of a component of the valve in figure 1, in accordance with a form of implementation of this invention;
figure 6 represents perspective and lateral views of a component of the valve in figure 1, in accordance with a further form of implementation of this invention;
figure 7 represents a section view of a valve in accordance with a further form of implementation of this invention;
figure 8 represents a perspective view in separate parts of the valve in figure 7;
figure 9 represents a section view of a valve in accordance with a further form of implementation of this invention;
figure 10 represents a perspective view of separate parts of the valve in figure 9.

The elements or parts of elements common to the forms of implementation described below will be indicated by the same numerical references.

With reference to the aforementioned figures, number 4 globally indicates a check valve for regulating liquid outflow.

Valve 4 consists of a valve body 8 that delimits an outflow chamber 12 which extends from inlet 16 to outlet 20 of valve 4. In accordance with one form of implementation, the valve body 8 is substantially cylindrical along extension axis X-X.

Valve 4 consists of a shutter 24, housed in said outflow chamber 12, suitable for closing inlet 16 of the valve in correspondence to closure portion 28 facing said inlet 16.

Preferably the shutter 24, in correspondence to closure portion 28, consists of a gasket 29, e.g. an O-ring, to guarantee a hermetic seal against valve body 8.

In correspondence to the said outlet 20, the valve body is associated with a plate 26 such as to permit insertion and subsequent locking of the shutter in outflow chamber 12.

Advantageously, shutter 24 includes at least one portion in ferromagnetic material; for example the shutter consists of an internal nucleus in a ferromagnetic material, coated externally with a layer of polymeric material, compatible with foodstuffs or pharmaceutical fluids and with good resistance to wear and abrasion. For example the nucleus in ferromagnetic material may be coated with Teflon. In the description, "ferromagnetic material" also means a permanent magnet.

Preferably the said shutter 24 is made entirely of ferromagnetic stainless steel.

Advantageously, valve 4 includes means for the generation of magnetic field 40, the said means 40 being set on valve body 8, external to outflow chamber 12, in such a way as to generate a magnetic field which influences shutter 24 and is not influenced by the flow of fluid crossing outflow chamber 12.

In accordance with one form of implementation, the said means for generating a magnetic field 40 are set coaxially to valve body 8 and extension axis X-X, in correspondence to the said inlet 16.

In accordance with one form of implementation, the said means 40 consist of a toroidal magnet 44 set coaxially to the valve body 8 in correspondence to an annular housing 48 of valve body 8, opposite the said outflow chamber 12. In other words, valve body 8, on an external wall opposite outflow chamber 12, consists of annular housing 48 suitable for housing a toroidal magnet 44.

Preferably the said toroidal magnet 44 is created in at least two halves or semi-rings 52, set coaxially with regard to valve body 8.

Preferably valve body 8 includes an abutment portion suitable to abut with closure portion 28 of the shutter to close inlet 16 of valve 4.

Preferably the abutment portion 60 has a chamfer 64 and the shutter 24 has a closure portion 28 at least partially counterprofiled with regard to chamfer 64.

Preferably housing 48 of magnetic means 40 includes a conical portion 68 counterprofiled with regard to chamfer 64. In accordance with other possible forms of implementation, housing 48, with regard to a section plane passing through said extension axis X-X, has a square, rectangular, circular, elliptical or flat section.

Preferably magnet 44 in turn has a countersinking 72 suitable for insertion with a coupling of form in conical portion 68.

In accordance with one form of implementation, valve body 8 includes sealing means 76 suitable for locking in place the magnetic means 40 and preventing contact between magnetic means 40 and the external environment of valve 4.

For example, sealing means 76 consist of a ring gasket 80 fitted on magnetic means 40.

In accordance with the invention, the shutter 24 is counterprofiled with regard to the internal walls of outflow chamber 12 in such a way as to delineate with the said chamber a passage of constant section.

In this way the speed of liquid outflow remains as constant as possible and the formation of foams and/or emulsions is avoided.

The check valve 4 includes at least one fin 88 suitable for subdividing the incoming flow into a plurality of flows and for creating a guide and an alignment for the shutter.

In accordance with the invention, shutter 24 includes at least one fin 88 and, preferably, includes a plurality of fins 88.

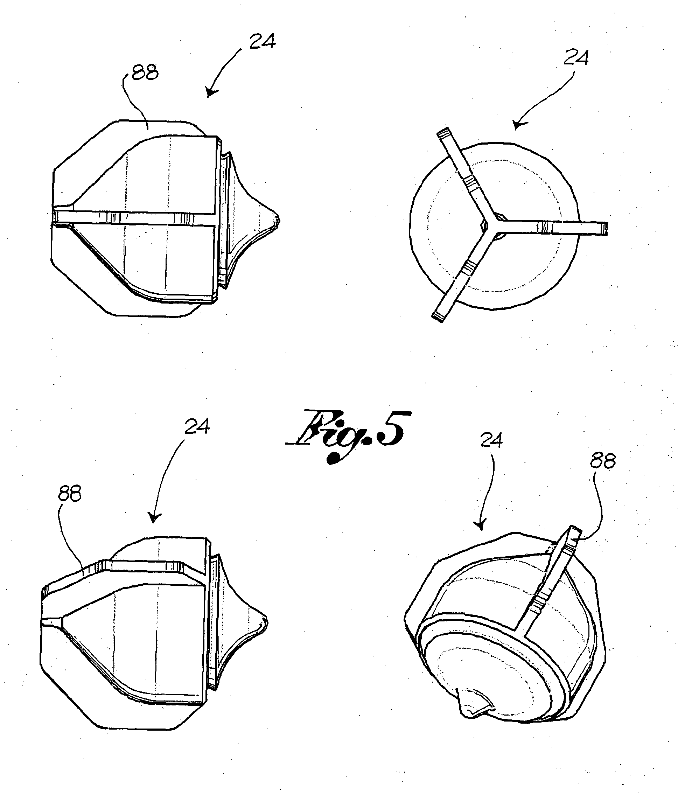

In accordance with one form of implementation (figure 5), fins 88 are substantially parallel to the prevalent extension axis X-X.

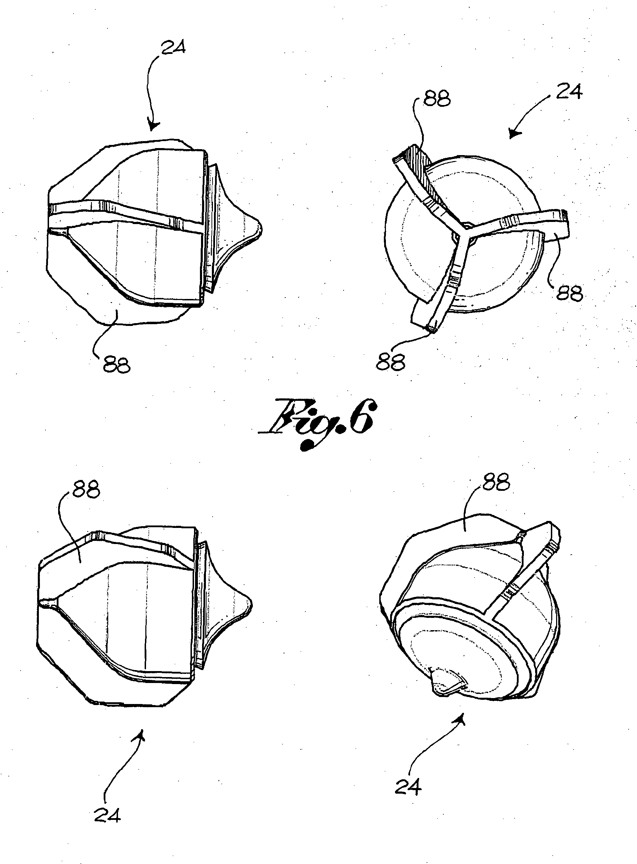

In accordance with a further and favoured form of implementation (figure 6), fins 88 are twisted with regard to said extension axis X-X in such a way as to bring about rotation of shutter 24 under the thrust of the liquid flow.

In accordance with one possible form of implementation, shutter 24 includes at least two fins 88; preferably the shutter includes three fins set equally angularly spaced along an external side wall of shutter 24.

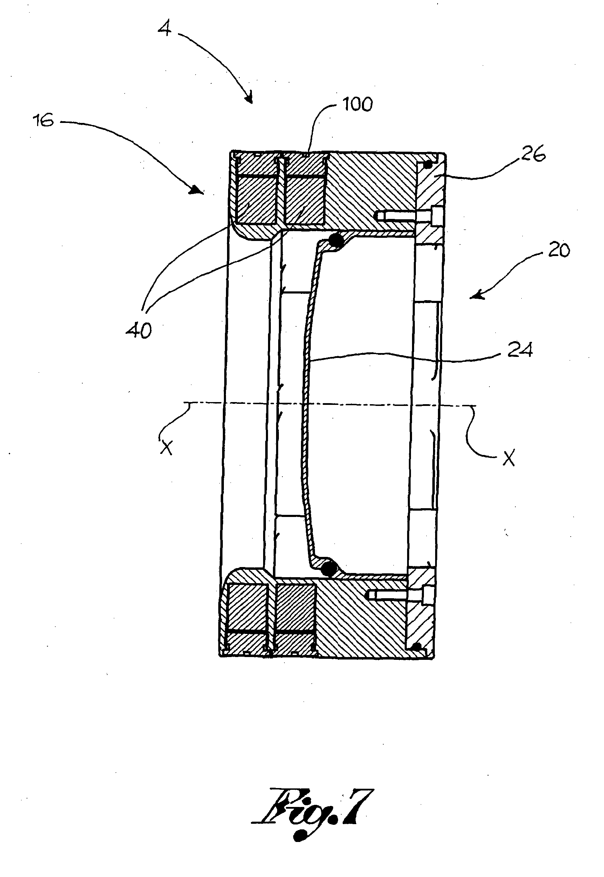

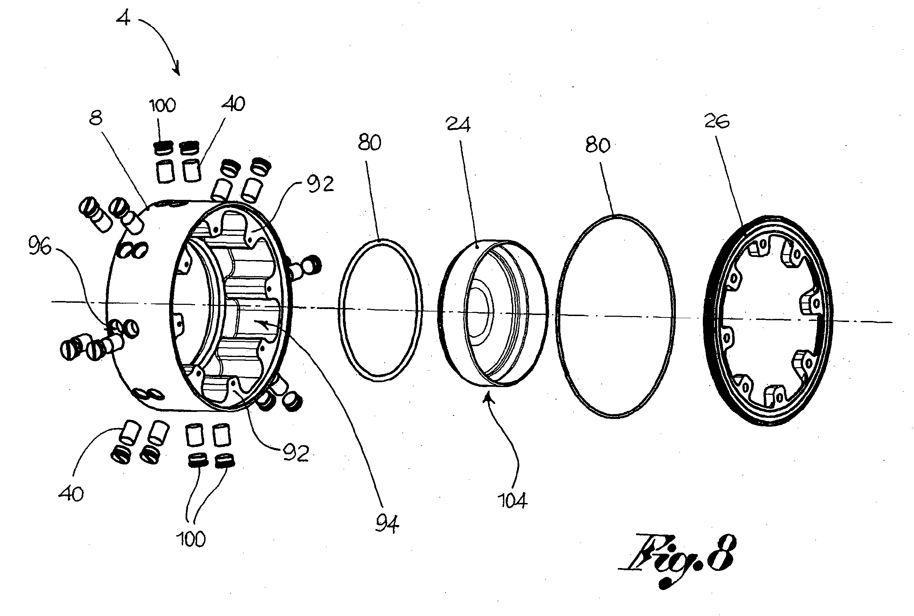

In accordance with a further advantageous form of implementation, the said fins 88 are obtained from valve body 8. For example, valve body 8 (figure 7-8) includes a plurality of protuberances 92, preferably radial, facing outflow chamber 12. Advantageously the said protuberances 92 have the function of fins 88, interfering with the flow through outflow chamber 12 in such a way as to subdivide the inlet flow into a plurality of flows, creating a guide and an alignment for shutter 24.

In particular, two protuberances 92, adjacent or consecutive, form throat 94 which represents the area of the passage of a flow.

Preferably the said protuberances 92 extend axially, which is to say parallel to said extension axis X-X. Protuberances 92 are advantageously hollow in such a way as to house, in special cavities 96, the means for generating magnetic field 40, for example in the form of cylindrical or disc magnets.

The protuberances 92 are closed by outflow chamber 12 in such a way that the fluid of valve 4 cannot enter the said cavities 96; cavities 96 disembogue towards the exterior of valve body 8 in such a way as to be accessible from the exterior. In this way it is possible to insert magnets 40 from outside valve body 8 and lock them in cavities 96 with, for example, bolts or pins 100.

Preferably the valve body 8 includes a plurality of protuberances 92, set angularly step-by-step. Also preferably, valve body 8 equipped with protuberances 92 is associated with a shutter 24, having a lateral area 104, cylindrical with regard to extension axis X-X.

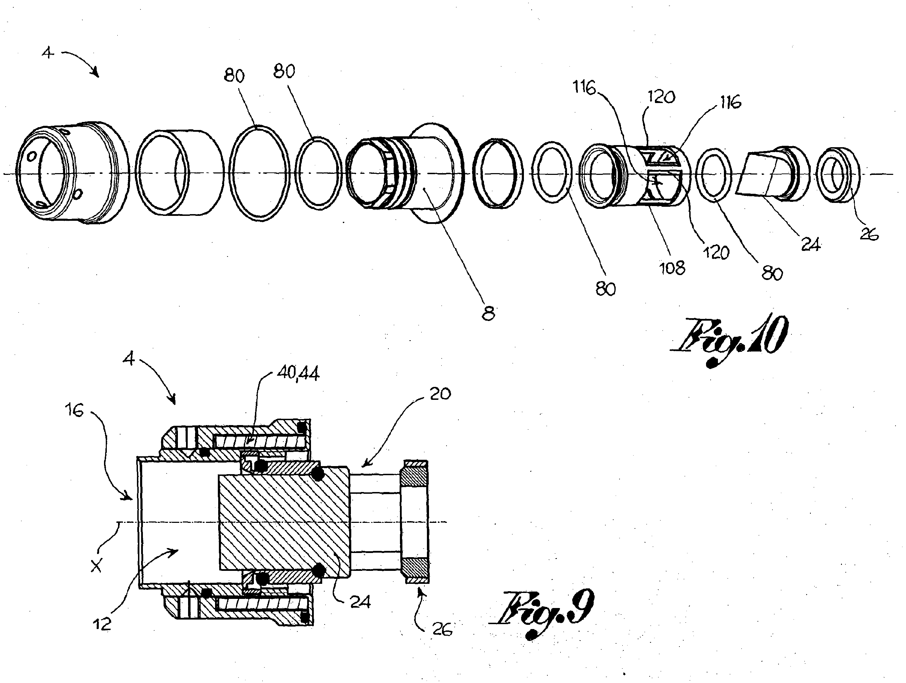

In accordance with a further form of implementation (figures 9-10), shutter 24 is housed in outflow chamber 12, the former equipped with shutter guide 108. For example shutter 24 includes central divider 112 to subdivide the flow. Shutter guide 108 includes for example a cylindrical portion equipped with windows 116 delimited angularly by bars 120. The combination of windows 116 and bars 120 subdivides the inlet flow into a plurality of flows, creating a guide and alignment for shutter 24.

There follows a description of the functioning of a valve in accordance with the invention.

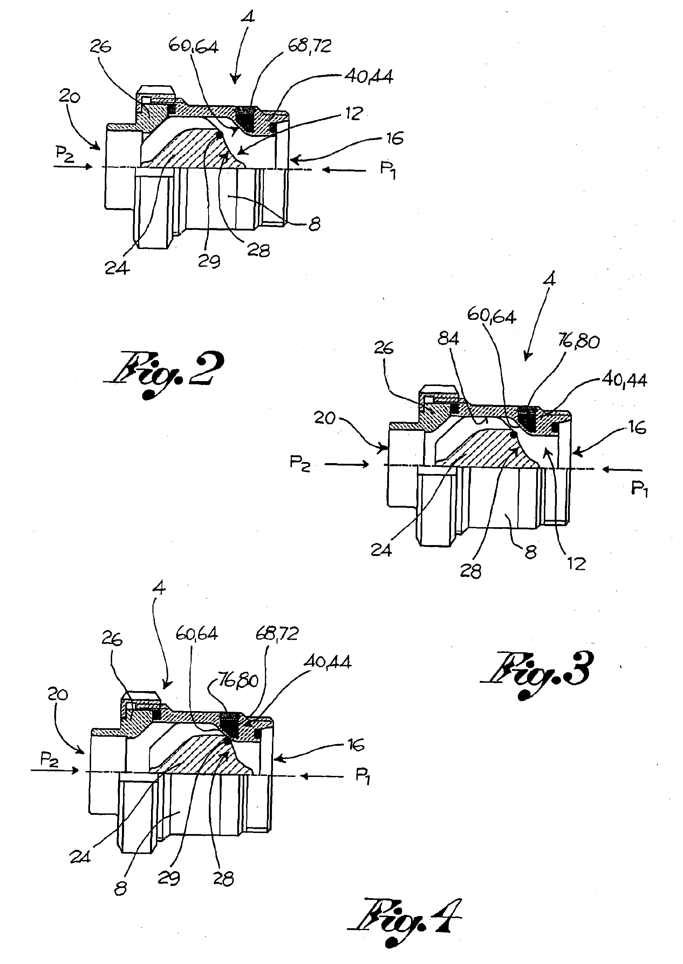

In particular the means of generating the magnetic field 40 exert a force of attraction on shutter 24 in such a way as to bring it to closure configuration (figure 4).

When the force exerted by the inlet fluid on closure portion 28 of shutter 24 exceeds the force of magnetic attraction and the returning force of the shutter due to the pressure of outgoing fluid, shutter 24 opens and permits the passage of fluid (figure 3).

Advantageously, subsequent to the distancing of shutter 24 from closure position, the magnetic force of attraction acting thereon diminishes and therefore, the inlet fluid pressure being equal, the opening effect of shutter 24 tends automatically to increase until the shutter is in maximum open position (figure 2).

The fluid is therefore free to pass into valve body 8 through a constant passage section which, limiting variations of fluid speed, contributes to achieving laminar flow, without turbulence and the consequent formation of foams and emulsions.

In accordance with a further possible form of implementation, shutter 24 is shifted from open to closed mode (and vice versa) by external actuation with regard to outflow chamber 12, in such a way as to overcome the action of the magnet.

Shutter 24 equipped with twisted fins can rotate under the thrust of the incoming fluid; this rotation prevents the formation of stagnant liquid.

When the force exerted by the incoming fluid is less than that of the outgoing fluid, added to the force of magnetic return of shutter 24, the shutter goes back to closure configuration and the passage of fluid is interrupted.

Also in closure, the return force due to magnet 44 increases on the approach of shutter 24 to the magnet itself; so the closure effect is automatically increased, improving valve efficiency.

As may be appreciated from the foregoing, the check valve as per the invention overcomes the drawbacks of current techniques.

In particular, the valve offers reduced energy consumption, thanks to the low energy required to activate it and the low drop of pressure between inlet and outlet.

The valve permits a very regular flow of liquid with minimal losses of load and therefore with a minimal drop in pressure between valve inlet and outlet.

The valve components have a very slight roughness, thus limiting fluid turbulence and consequent losses of load, as well as the formation of foams and emulsions.

The valve can create a laminar flow which further limits the formation of foams and emulsions.

Moreover the geometry of the shutter and the valve body create a constant passage section for the fluid in such a way that the flow has a constant speed in passing through the valve.

The valve in accordance with this invention has high resistance to mechanical and chemical corrosion due to low turbulence and the possibility of using stainless steels that are resistant to chemical and mechanical aggression as well as being compatible with applications for foodstuff, chemical and biological fluids.

The presence of the twisted fins creates a slight rotation of the shutter which prevents any formation of stagnant points or static contact of the shutter with the valve body which could lead to the formation of dirt.

Advantageously the magnet is positioned outside the valve body in such a way as to avoid contact with the liquid passing through the valve. In this way the magnet is not subject to any kind of mechanical and/or chemical corrosion.

Advantageously, the magnet is in turn protected from external corrosive agents by a chemical surface treatment and a gasket.

Advantageously, the magnet exerts a force of attraction on the shutter in the closure configuration of the valve. In other words, in closure configuration the force of attraction between the shutter and the magnet is maximum to the extent that the distance between the two components is minimum. Whereas when the valve is open the force of attraction between the magnet and the shutter is minimum inasmuch as the distance between the components is maximum.

This functioning is unlike the functioning of traditional spring-loaded non-return valves where the elastic power of the spring is minimum in closure and maximum in opening, thus increasing the energy consumption of the valve.

A sector technician, with view to meeting contingent and specific needs, could carry out numerous modifications and variations with regard to the valves described above, but without straying from the context of the invention as defined by the following claims.

## Claims

1. Check valve (4) for regulating outflow of a fluid, including
- a valve body (8) that delimits an outflow chamber (12) which extends from an inlet (16) to an outlet (20) of the valve (4),
- a shutter (24) housed in said outflow chamber (12) suitable for blocking the said inlet (16) in correspondence to a closure portion (28) facing the said inlet (16) in which the shutter (24) includes at least one portion in ferromagnetic material,
- wherein the valve (4) includes the means for generation of a magnetic field (40), the said means (40) being set out on the valve body (8), externally to the said outflow chamber (12), in such a way as to generate a magnetic field that influences the shutter (24) and is not affected by the flow crossing the outflow chamber (12),
- the valve (4) includes at least one fin (88,92,120) suitable for subdividing the inlet flow into a plurality of flows and creating a guide and alignment for the shutter (24),
**characterised in that**
said shutter (24) is counterprofiled with regard to the internal walls (84) of outflow chamber (12) in such a way as to form with the said chamber (12) a passage with a constant section, wherein the geometry of the shutter and the valve body creates a constant passage section for the fluid in such a way that the flow has a constant speed in passing through the valve.

2. Valve (4) in accordance with claim 1, in which the shutter (24) includes a plurality of fins (88) suitable for subdividing the inlet flow into a plurality of flows.

3. Valve (4) in accordance with claim 1 or 2, in which the shutter (24) includes three fins (88) set equally angularly spaced along a lateral external wall of the shutter (24).

4. Valve (4) in accordance with claim 2 or 3, in which the said fins (88) are twisted with regard to the said extension axis (X-X) in such a way as to bring about rotation of the shutter (24) under the action of the thrust of fluid flow.

5. Valve (4) in accordance with claim 1, in which at least one fin (88) is obtained from the valve body (8) and in which the valve body (8) includes a plurality of radial protuberances (92) facing the outflow chamber (12) which carries out the function of the said fins (88) in such a way as to subdivide the inlet flow in a plurality of flows and create a guide and an alignment for the shutter (24).

6. Valve (4) in accordance with claim 5, in which at least two protuberances (92), adjacent or consecutive, delimit a throat (94) that creates the section of flow passage.

7. Valve (4) in accordance with claim 5 or 6, in which said protuberances (92) extend axially, parallel to an extension axis (X-X) of the valve body (8).

8. Valve (4) in accordance with claim 5, 6 or 7 in which the protuberances (92) are hollow in such a way as to house, in cavities (96), said means for generating a magnetic field (40).

9. Valve (4) in accordance with claim 8, in which the protuberances (92) are closed on the side of the outflow chamber (12) and the cavities (96) disembogue towards the exterior of the valve body (8).

10. Valve (4) in accordance with claim 8 or 9, in which the magnets (40) are housed in the said cavities (96) and fixed by bolts or pins (100).

11. Valve (4) in accordance with claim 1, in which the shutter (24) is housed in the outflow chamber (12), the former equipped with an appropriate shutter guide (108).

12. Valve (4) in accordance with claim 11, in which the shutter (24) includes a central divider (112) for subdividing the flow.

13. Valve (4) in accordance with claim 11 or 12 in which the shutter guide (108) includes a cylindrical portion (114) equipped with windows (116) delimited angularly by bars (120) in such a way as to subdivide the inlet flow into a plurality of flows and create a guide and alignment for the shutter (24).

14. Valve (4) in accordance with any of the preceding claims, in which the said means for generating a magnetic field (40) are set coaxially to the valve body (8) in correspondence to the said inlet (16) and in which the said means for generating a magnetic field (40) include a toroidal magnet (44) set coaxially to the valve body (8) in correspondence to an annular housing (48) of valve body (8) opposite the said outflow chamber (12).

15. Valve (4) on accordance with any of the preceding claims in which the valve body (8) includes an abutment portion (60) suitable to abut with closure portion (28) of shutter (24), the abutment portion (60) having a chamfer (64) to favour hermetic closure of the inlet.

16. Valve (4) in accordance with claim 15 in which the shutter (24) includes a closure portion (28) at least partially counterprofiled with regard to the said chamfer (64).

17. Valve (4) in accordance with any of the claims from 14 to 15 in which housing (48) of the said magnetic means (40) includes a conical portion (68) counterprofiled with regard to the chamfer (64) and in which the magnet (44) has a countersinking (72) suitable for insertion with coupling of form in the conical portion (68).

18. Valve (4) in accordance with any of the preceding claims in which the valve body (8) includes sealing means (76) suitable for locking the magnetic means in place (40) and preventing contact between the magnetic means (40) and the external environment of the valve.

19. Valve (4) in accordance with any of the preceding claims in which the shutter (24), in correspondence to the closure portion (28), includes a gasket (29) to ensure a hermetic seal against the valve body (8).

## Patentansprüche

1. Rückschlagventil (4) zum Regulieren des Ausströmens eines Fluids,
das umfasst:
- einen Ventilkörper (8), der eine Ausströmungskammer (12) begrenzt, die sich von einem Einlass (16) zu einem Auslass (20) des Ventils (4) erstreckt,
- ein Verschluss (24), der in der Ausströmungskammer (12) aufgenommen ist, der geeignet ist, um den Einlass (16) entsprechend einem Schließabschnitt (28), der dem Einlass (16) zugewandt ist, zu sperren, wobei der Verschluss (24) wenigstens einen Abschnitt in ferromagnetischem Material umfasst,
- wobei das Ventil (4) die Mittel zur Erzeugung eines Magnetfelds (40) umfasst, wobei die Mittel (40) auf dem Ventilkörper (8) außerhalb der Ausströmungskammer (12) in einer derartigen Weise festgelegt sind, dass ein Magnetfeld erzeugt wird, das den Verschluss (24) beeinflusst und nicht durch die Strömung, die die Ausströmungskammer (12) kreuzt, beeinflusst wird,
- das Ventil (4) wenigstens eine Rippe (88, 92, 120) umfasst, die geeignet ist, um die Einlassströmung in eine Vielzahl von Strömungen zu unterteilen und eine Führung und Ausrichtung für den Verschluss (24) zu erzeugen, **dadurch gekennzeichnet, dass**
der Verschluss (24) in Bezug auf die Innenwände (84) der Ausströmungskammer (12) in einer derartigen Weise ein Gegenprofil hat, um mit der Kammer (12) einen Durchgang mit einem konstanten Querschnitt zu bilden, wobei die Geometrie des Verschlusses und des Ventilkörpers in einer derartigen Weise einen konstanten Durchgangsquerschnitt für das Fluid bildet, dass die Strömung beim Durchlaufen des Ventils eine konstante Geschwindigkeit hat.

2. Ventil (4) nach Anspruch 1, wobei der Verschluss (24) eine Vielzahl von Rippen (88) umfasst, die für das Unterteilen der Einlassströmung in eine Vielzahl von Strömungen geeignet sind.

3. Ventil (4) nach Anspruch 1 oder 2, wobei der Verschluss (24) drei Rippen (88) umfasst, die entlang einer seitlichen Außenwand des Verschlusses (24) gleichmäßig winkelig beabstandet sind.

4. Ventil (4) nach Anspruch 2 oder 3, wobei die Rippen (88) in Bezug auf die Ausdehnungsachse (X-X) in einer derartigen Weise verdreht sind, dass sie unter der Einwirkung des Schubs der Fluidströmung eine Drehung des Verschlusses (24) herbeiführen.

5. Ventil (4) nach Anspruch 1, wobei wenigstens eine Rippe (88) von dem Ventilkörper (8) erhalten wird, und wobei der Ventilkörper (8) mehrere radiale Höcker (92) umfasst, die der Ausströmungskammer (12) zugewandt sind, die die Funktion der Rippen (88) in einer derartigen Weise ausführen, dass die Einlassströmung in eine Vielzahl von Strömungen unterteilt wird, und eine Führung und eine Ausrichtung für den Verschluss (24) erzeugt wird.

6. Ventil (4) nach Anspruch 5, wobei wenigstens zwei benachbarte oder aufeinanderfolgende Höcker (92) einen Hals (94), der einen Querschnitt des Strömungsdurchgangs erzeugt, begrenzen.

7. Ventil (4) nach Anspruch 5 oder 6, wobei die Höcker (92) sich axial parallel zu einer Ausdehnungsachse (X-X) des Ventilkörpers (8) erstrecken.

8. Ventil (4) nach Anspruch 5, 6 oder 7, wobei die Vorsprünge (92) in einer derartigen Weise hohl sind, dass sie die Mittel zur Erzeugung eines Magnetfelds (40) in Hohlräumen (96) aufnehmen.

9. Ventil (4) nach Anspruch 8, wobei die Höcker (92) auf der Seite der Ausströmungskammer (12) geschlossen sind und die Hohlräume (96) in Richtung des Äußeren des Ventilkörpers (8) münden.

10. Ventil (4) nach Anspruch 8 oder 9, wobei die Magnete (40) in den Hohlräumen (96) untergebracht sind und durch Bolzen oder Stifte (100) befestigt sind.

11. Ventil (4) nach Anspruch 1, wobei der Verschluss (24) in der Ausströmungskammer (12) aufgenommen ist, wobei der erstere mit einer passenden Verschlussführung (108) versehen ist.

12. Ventil (4) nach Anspruch 11, wobei der Verschluss (24) einen zentralen Teiler (112) zum Unterteilen der Strömung umfasst.

13. Ventil (4) nach Anspruch 11 oder 12, wobei die Verschlussführung (108) einen zylindrischen Abschnitt (114) umfasst, der mit Fenstern (116) versehen ist, die in einer derartigen Weise winkelig durch Stangen (120) begrenzt sind, dass die Einlassströmung in eine Vielzahl von Strömungen unterteilt wird und die Ausrichtung für den Verschluss (24) erzeugt wird.

14. Ventil (4) nach einem der vorhergehenden Ansprüche, wobei die Mittel zur Erzeugung eines Magnetfelds (40) entsprechend dem Einlass (16) koaxial zu dem Ventilkörper (8) eingerichtet sind, und wobei die Mittel zur Erzeugung eines Magnetfelds (40) einen Ringmagneten (44) umfassen, der entsprechend einem ringförmigen Gehäuse (48) des Ventilkörpers (8) entgegengesetzt zu der Ausströmungskammer (12) koaxial zu dem Ventilkörper (8) eingerichtet ist.

15. Ventil (4) nach einem der vorangehenden Ansprüche, wobei der Ventilkörper (8) einen Auflageabschnitt (60) umfasst, der geeignet ist, um auf dem Schließabschnitt (28) des Verschlusses (24) aufzuliegen, wobei der Auflageabschnitt (60) eine Abschrägung (64) hat, um den hermetischen Verschluss des Einlasses zu begünstigen.

16. Ventil (4) nach Anspruch 15, wobei der Verschluss (24) einen Schließabschnitt (28) umfasst, der in Bezug auf die Abschrägung (64) wenigstens teilweise ein Gegenprofil hat.

17. Ventil (4) nach einem der Ansprüche von 14 bis 15, wobei das Gehäuse (48) der magnetischen Mittel (40) einen konischen Abschnitt (68) umfasst, der in Bezug auf die Abschrägung (64) ein Gegenprofil hat und in dem der Magnet (44) eine konische Einsenkung (72) hat, die für den Formkopplungseinsatz in den konischen Abschnitt (68) geeignet ist.

18. Ventil (4) nach einem der vorangehenden Ansprüche, wobei der Ventilkörper (8) Dichtungsmittel (76) umfasst, die geeignet sind, um die magnetischen Mittel an ihrem Platz (40) zu arretieren und den Kontakt zwischen den magnetischen Mitteln (40) und der äußeren Umgebung des Ventils zu verhindern.

19. Ventil (4) nach einem der vorangehenden Ansprüche, wobei der Verschluss (24) entsprechend dem Schließabschnitt (28) eine Dichtung (29) umfasst, um eine hermetische Dichtung gegen den Ventilkörper (8) sicherzustellen.

## Revendications

1. Vanne d'arrêt (4) pour réguler l'écoulement d'un fluide, comprenant
- un corps de vanne (8) qui délimite une chambre de sortie (12) qui s'étend d'une entrée (16) à une sortie (20) de la vanne (4),
- un obturateur (24) logé dans ladite chambre de sortie (12), adapté pour fermer ladite entrée (16) en correspondance avec une partie de fermeture (28)faisant face à ladite entrée (16), lequel obturateur (24) comprend au moins une partie en matériau ferromagnétique,
- la vanne (4) comprenant un moyen pour générer un champ magnétique (40), lequel moyen (40) est disposé sur le corps de vanne (9), à l'extérieur de ladite chambre de sortie (12), de manière à générer un champ magnétique qui influe sur l'obturateur (24) et n'est pas affecté par le flux traversant la chambre de sortie (12),
- la vanne (4) comportant au moins une ailette (88, 92, 120) adaptée pour subdiviser le flux d'entrée en plusieurs flux et créer un guidage et un alignement pour l'obturateur (24),
**caractérisée en ce que** ledit obturateur (24) présente un contre-profil par rapport aux parois intérieures (84) de la chambre de sortie (12) de telle manière qu'il forme avec ladite chambre (12) un passage de section constante, la géométrie de l'obturateur et du corps de vanne créant une section de passage constante pour le fluide de telle manière que le flux ait une vitesse constante lorsqu'il passe à travers la vanne.

2. Vanne (4) selon la revendication 1, dans laquelle l'obturateur (24) comprend plusieurs ailettes (88) adaptées pour subdiviser le flux d'entrée en plusieurs flux.

3. Vanne (4) selon la revendication 1 ou 2, dans laquelle l'obturateur (24) comprend trois ailettes (88) écartées selon des angles égaux le long de la paroi extérieure latérale de l'obturateur (24).

4. Vanne (4) selon la revendication 2 ou 3, dans laquelle lesdites ailettes (88) sont courbées par rapport audit axe d'extension (X-X) de manière à provoquer une rotation de l'obturateur (24) sous l'action de la poussée du flux de fluide.

5. Vanne (4) selon la revendication 1, dans laquelle au moins une ailette (88) est formée à partir du corps de vanne (8) et dans laquelle le corps de vanne (8) comprend plusieurs protubérances radiales (92) faisant face à la chambre de sortie (12) qui réalisent la fonction desdites ailettes (88) en subdivisant le flux d'entrée en plusieurs flux et en créant un guidage et un alignement pour l'obturateur (24).

6. Vanne (4) selon la revendication 5, dans laquelle au moins deux protubérances (92) adjacentes ou consécutives délimitent une gorge (94) qui créer la section de passage du flux.

7. Vanne (4) selon la revendication 5 ou 6, dans laquelle lesdites protubérances (92) s'étendent dans le sens axial parallèlement à l'axe d'extension (X-X) du corps de vanne (8).

8. Vanne (4) selon la revendication 5, 6 ou 7, dans laquelle les protubérances (92) sont creuses de façon à loger ledit moyen pour générer un champ magnétique (40) dans des cavités (96).

9. Vanne (4) selon la revendication 8, dans laquelle les protubérances (92) sont fermées du côté de la chambre de sortie (12) et les cavités (96) débouchent vers l'extérieur du corps de vanne (8).

10. Vanne (4) selon la revendication 8 ou 9, dans laquelle les aimants (40) sont logés dans lesdites cavités (96) et fixées par des boulons ou des goupilles (100).

11. Vanne (4) selon la revendication 1, dans laquelle l'obturateur (24) est logé dans la chambre de sortie (12) et est muni d'un guide d'obturateur (108) approprié.

12. Vanne (4) selon la revendication 11, dans laquelle l'obturateur (24) comprend une chicane centrale (112) pour subdiviser le flux.

13. Vanne (4) selon la revendication 11 ou 12, dans laquelle le guide d'obturateur (108) comprend une partie cylindrique (114) équipée de fenêtres (116) délimitées de façon angulaire par des barreaux (120) de façon à subdiviser le flux d'entrée en plusieurs flux et à créer un guidage et un alignement pour l'obturateur (24).

14. Vanne (4) selon l'une quelconque des revendications précédentes, dans laquelle ledit moyen pour générer un champ magnétique (40) est disposé de façon coaxiale par rapport au corps de vanne (8) en correspondance avec ladite entrée (16) et dans laquelle ledit moyen pour générer un champ magnétique (40) comprend un aimant toroïdal (44) disposé de façon coaxiale par rapport au corps de vanne (9) en correspondance avec un logement annulaire (48) du corps de vanne (8) en face de ladite chambre de sortie (12).

15. Vanne (4) selon l'une quelconque des revendications précédentes, dans laquelle le corps de vanne (8) comprend une partie formant butée (60) adaptée pour buter avec la partie de fermeture (29) de l'obturateur (24), laquelle partie formant butée (60) possède un chanfrein (64) afin de faciliter la fermeture hermétique de l'entrée.

16. Vanne (4) selon la revendication 15, dans laquelle l'obturateur (24) comprend une partie de fermeture (28) présentant au moins en partie un contre-profil par rapport audit chanfrein (64).

17. Vanne (4) selon l'une quelconque des revendications 14 à 15, dans laquelle le logement (48) dudit moyen magnétique (40) comprend une partie conique (68) avec un contre-profil par rapport au chanfrein (64) et dans laquelle l'aimant (44) présente un fraisage (72) permettant l'insertion en correspondance de forme dans la partie conique (68).

18. Vanne (4) selon l'une quelconque des revendications précédentes, dans laquelle le corps de vanne (8) comprend des moyens d'étanchéité (76) pouvant bloquer en place le moyen magnétique (40) et empêchant le contact entre le moyen magnétique (40) et l'environnement extérieur de la vanne.

19. Vanne (4) selon l'une quelconque des revendications précédentes, dans laquelle l'obturateur (24), en correspondance avec la partie de fermeture (28), comprend un joint (29) pour assurer une étanchéité hermétique vis-à-vis du corps de vanne (8).
